(19) Europäisches Patentamt
European Patent Office
Office européen des brevets

(11) EP 3 785 945 A1

(12) EUROPEAN PATENT APPLICATION
published in accordance with Art. 153(4) EPC

(43) Date of publication:
03.03.2021 Bulletin 2021/09

(51) Int Cl.:
B60C 13/00 (2006.01)   B60C 1/00 (2006.01)
B60C 13/04 (2006.01)   C08K 3/01 (2018.01)
C08K 3/04 (2006.01)   C08K 3/36 (2006.01)
C08K 5/20 (2006.01)   C08L 7/00 (2006.01)
C08L 9/00 (2006.01)   C08L 21/00 (2006.01)

(21) Application number: 19791765.1

(22) Date of filing: 24.04.2019

(86) International application number:
PCT/JP2019/017477

(87) International publication number:
WO 2019/208649 (31.10.2019 Gazette 2019/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.04.2018 JP 2018083112

(71) Applicant: Bridgestone Corporation
Chuo-Ku
Tokyo 104-8340 (JP)

(72) Inventor: MUSHA, Shinichi
Tokyo 104-8340 (JP)

(74) Representative: Oxley, Robin John George
Marks & Clerk LLP
15 Fetter Lane
London EC4A 1BW (GB)

(54) **VULCANIZED RUBBER BODY AND TIRE TO WHICH VULCANIZED RUBBER BODY IS ATTACHED TO SIDEWALL THEREOF**

(57) An object of the present invention is to lower a coefficient of friction of the sidewall surface to reduce the friction between the tire sidewall and the curb stone, thereby enabling one to suppress the abrasion of the tire sidewall due to curb stone rubbing and also enabling one to use the tire for a long period of time. Provided is a tire prepared by attaching a vulcanized rubber body of a rubber composition containing a fatty acid amide onto the outer surface of a sidewall thereof.

[Fig. 1]

EP 3 785 945 A1

**Description**

Technical Field

The present invention relates to a vulcanized rubber body and a tire prepared by attaching a the vulcanized rubber body onto a sidewall thereof. In more detail, the present invention relates to a heavy duty pneumatic tire, in which a vulcanized rubber body is attached onto a sidewall of a pneumatic tire to be used for vehicles having a relatively heavy total vehicle weight, such as trucks or buses inclusive of small-sized trucks, or off-road vehicles for construction vehicles, mine vehicles, etc., and in particular, it relates to a pneumatic tire for urban driving bus, in which a vulcanized rubber body is attached onto a sidewall of the tire.

Background of the Invention

A pneumatic tire for urban driving bus allows passengers to get on and off while frequently stopping at bus stops provided with small intervals in urban districts. In recent years, due to trends with barrier-free design, by bringing a vehicle body of the bus into close contact with a curb stone to dissolve a gap generated between a vehicular entrance and a footpath, it is experimentally performed to reduce a burden on the occasion when an aged person or a person who uses a wheelchair or stroller gets on and off.

In order to dissolve a gap between a vehicle body of the bus and a curb stone, it is necessary to make a sidewall portion of the tire close to the curb stone as far as possible. However, according to this, the sidewall of the tire is early abrased due to friction of curb stone rubbing, so that the life of the tire becomes short. As a countermeasure for the abrasion due to friction of the sidewall of the tire, there is a method of increasing the thickness of the sidewall. However, according to this method, the weight of the tire is increased, and such is not preferred from the viewpoint of fuel consumption. In addition, a treatment of altering a compounding agent to be mixed in a rubber composition is performed (see PTL 1). However, such a treatment is not satisfactory as the countermeasure for the sidewall with a high frequency of curb stone rubbing, and more improvements have been demanded.

Citation List

Patent Literatures

PTL 1: JP H10-195249 A

Summary of the Invention

Technical Problem

Under these circumstances, a problem of the present invention is to lower a coefficient of friction of the outer surface of the sidewall to keep a 300% tensile stress (the sidewall rubber does not become hard) to reduce the friction between the tire sidewall and the curb stone, thereby enabling one to suppress the abrasion of the tire sidewall due to curb stone rubbing and also enabling one to use the tire for a long period of time.

Solution to Problem

In order to solve the aforementioned problem, the present inventor made extensive and intensive investigations. As a result, it has been found that the problem of the present invention can be solved by attaching a vulcanized rubber body made of a rubber composition containing a specified amide compound onto the outer surface of a tire sidewall, thereby leading to accomplishment of the present invention.

Specifically, the present invention provides a vulcanized rubber body and a tire prepared by attaching the vulcanized rubber body of a rubber composition containing a specific fatty acid amide onto the outer surface of a sidewall; and a heavy duty pneumatic tire, especially a tire for urban driving bus.

Advantageous Effects of Invention

In accordance with the present invention, by attaching a vulcanized rubber body capable of reducing a coefficient of friction of the outer surface of a sidewall to keep a 300% tensile stress (without the sidewall rubber becoming hard) and suppressing abrasion due to curb stone rubbing of a tire to the outer surface of the sidewall, the tire can be used for a long period of time. In particular, by repeatedly re-attaching the vulcanized rubber body onto the outer surface of the sidewall, the tire can be used for a longer period of time.

Brief Description of the Drawing

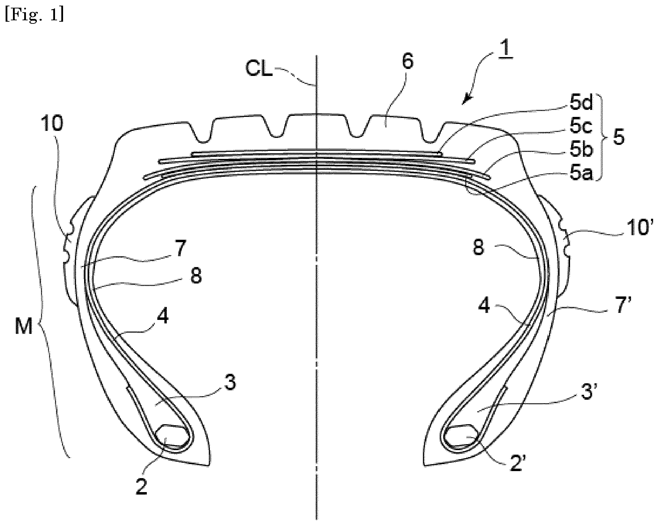

Fig. 1 is a schematic cross-sectional view showing one example of a tire of the present invention, in which the vulcanized rubber body according to the present invention is attached onto the outer surface of a sidewall thereof.

Description of Embodiments

[Tire Prepared by Attaching Vulcanized Rubber Body Stuck onto Outer Surface of Sidewall]

The present invention is concerned with a tire prepared by attaching a vulcanized rubber body of a rubber composition containing a specific fatty acid amide onto the outer surface of a sidewall thereof.

Fig. 1 is a schematic cross-sectional view showing one example of a tire of the present invention, in which the vulcanized rubber body according to the present invention is attached onto the outer surface of a sidewall thereof.

In an example of this tire 1, stiffeners 3 and 3' extend outside in the tire radial direction from a pair of bead cores 2 and 2', respectively, and a belt portion 5 composed of plural belt layers (four layers of 5a to 5d in Fig. 1) is arranged outside in the tire radial direction of a carcass ply 4 that is folded from the bead core 2 outside the stiffener 3 to form a toroidal tire casing shape, folded at the bead core 2' on the opposite side and fixed outside the stiffener 3'. A tread portion 6 is arranged outside in the tire radial direction of the belt portion 5. Outside the carcass ply 4 and between the tread portion 6 and the stiffener 3, arranged are sidewalls 7 and 7'. The portion where the sidewalls 7 and 7' are arranged is referred to as a side portion M. Inside the carcass ply 4, arranged is an inner liner 8 serving as an air penetration-preventing layer.

Vulcanized rubber bodies 10 and 10' are attached onto the outer surfaces of the sidewalls 7 and 7', respectively. In particular, the vulcanized rubber bodies 10 and 10' are each attached to a portion where they possibly come into contact with a curb stone of a road, among the surfaces of the sidewall portion M.

It is preferred that the vulcanized rubber bodies 10 and 10' are attached over the entire surface of the tire. Though it is preferred that the vulcanized rubber bodies 10 and 10' are continuously attached over the entire surface of the tire, in the case where it is needed to partially re-attach them, the vulcanized rubber bodies 10 and 10' may be discontinuously attached over the entire surface of the tire.

In the present invention, the positions of the outer surfaces of the sidewall to which the vulcanized rubber bodies 10 and 10' are to be attached can be properly altered so as to conform to a shape of the curb stone of the road.

[Vulcanized Rubber Body]

The vulcanized rubber body according to the present invention is obtained by vulcanizing the rubber composition containing a fatty acid amide.

Though the vulcanized rubber bodies 10 and 10' may have a flat surface, it is preferred that they have an uneven surface. This is because the state of abrasion of the convex part of the vulcanized rubber body is grasped, thereby deciding the timing of re-attaching.

An average thickness of each of the vulcanized rubber bodies 10 and 10' is preferably 1.0 to 3.0 mm, and an average width thereof is preferably 30 to 80 mm. The average width as referred to herein refers to a width along the outer surface of the sidewall from the inside in the tire radial direction to the outside in the tire radial direction when attached onto the tire. In the case where the average thickness is thinner than 1.0 mm, the re-attaching frequency becomes higher, whereas in the case where the average thickness is thicker than 3.0 mm, an influence against the rolling resistance of the tire becomes large. In addition, in the case where the average width is narrower than 30 mm, there is a possibility that the tire side main body comes contact with the curb stone, whereas in the case where the average width is wider than 80 mm, an influence against the rolling resistance of the tire becomes large. In the case where the vulcanized rubber bodies 10 and 10' are in an elliptical or oval shape, an average value of the maximum width is defined as the average width.

In the present invention, the vulcanized rubber bodies 10 and 10' resulting from vulcanization of the rubber composition according to the present invention are attached onto the outer surfaces of the sidewalls 7 and 7', respectively. According to this, for example, the friction due to rubbing between the sidewall portion of the tire and the curb stone can be reduced. In addition, by repeatedly re-attaching the vulcanized rubber bodies 10 and 10' onto the outer surfaces of the sidewalls 7 and 7', the tire can be used for a longer period of time. From such a viewpoint, it is preferred that the vulcanized rubber bodies 10 and 10' according to the present invention are attached onto the outer surfaces of sidewalls of a heavy duty pneumatic tire, and it is more preferred that they are attached onto the outer surfaces of sidewalls of a pneumatic tire for urban bus.

Though vulcanization conditions of the vulcanized rubber body are not particularly limited, the vulcanization may be performed under pressure for a vulcanization time of 0.8 to 3.0 times of a 90% vulcanization time {tc(90)} as prescribed in JIS K6300-2:2001.

[Rubber Composition to be Used for Vulcanized Rubber Body]

(Rubber Component)

The rubber composition to be used for the vulcanized rubber body according to the present invention contains a diene-based rubber in an amount of preferably 60 to 100% by mass, more preferably 80% by mass or more, and especially preferably 100% by mass in the rubber component. This is because high strength and excellent abrasion resistance are revealed.

It is preferred that the rubber component of the rubber composition to be used for the vulcanized rubber body according to the present invention contains a natural rubber and a polybutadiene rubber, and it is more preferred that the rubber component is made of a natural rubber and a polybutadiene rubber. A mass ratio of natural rubber/polybutadiene rubber in the rubber component is preferably 50/50 to 10/90, more preferably 45/55 to 10/90, and especially preferably 45/55 to 15/85. When the mass ratio of the natural rubber to the polybutadiene rubber is 50/50 to 10/90, the size of an abrasion powder can be minimized, large "excelsior" or "chipping" can be inhibited, and the resistance to abrasion due to the curb stone rubbing is improved.

In the present invention, when a large quantity of the polybutadiene rubber (BR) is contained, the fatty acid amide readily migrates onto the outer surface of the sidewall, and hence, such is preferred.

A part of the natural rubber may be substituted with a synthetic polyisoprene rubber (IR) according to the necessity of workability, etc. of an unvulcanized rubber composition.

The rubber component may contain two or more kinds of natural rubbers (NR), two or more kinds of synthetic polyisoprene rubbers (IR), or two or more kinds of polybutadiene rubbers (BR).

(Fatty Acid Amide)

The rubber composition according to the present invention preferably contains 1 to 25 parts by mass of a fatty acid amide based on 100 parts by mass of the aforementioned rubber component. When the fatty acid amide is contained in an amount of 1 to 25 parts by mass, the fatty acid amide appropriately migrates (blooms) onto the outer surface of the sidewall, whereby the outer surface of the sidewall becomes lubricious, and a coefficient of friction on the outer surface of the sidewall is reduced, whereby the friction with the curb stone is reduced. Thus, the outer surface of the sidewall slides, so that it is hardly abrased. From this viewpoint, the fatty acid amide is contained in an amount of preferably 1.5 parts by mass or more, more preferably 2 parts by mass or more, and especially preferably 2.5 parts by mass or more. On the other hand, when the fatty acid amide is contained in an amount of more than 25 parts by mass, there is a case where blooming occurs at the time of processing of the unvulcanized rubber composition so that a molding defect with other member at the time of molding (bonding defect of the rubber member) is caused. From this viewpoint, the fatty acid amide is contained in an amount of preferably 25 parts by mass or less, more preferably 20 parts by mass or less, and especially preferably 15 parts by mass or less.

The fatty acid amide according to the present invention is preferably a fatty acid amide having 8 to 22 carbon atoms, and examples thereof include caprylic acid amide, lauric acid amide, myristic acid amide, palmitic acid amide, stearic acid amide, behenic acid amide, erucic acid amide, oleic acid amide, linoleic acid amide, and linolenic acid amide. Of these, oleic acid amide is preferred from the viewpoint of a balance between compatibility with the rubber and migration properties onto the surface.

(Filler)

The rubber composition to be used for the vulcanized rubber body according to the present invention contains, as a filler, carbon black in an amount of preferably 30 parts by mass or more, and more preferably 30 to 70 parts by mass based on 100 parts by mass of the aforementioned rubber component.

When the carbon black is contained in an amount of 30 parts by mass or more based on 100 parts by mass of the aforementioned rubber component, the tensile modulus can be enhanced, and the abrasion of the sidewall due to curb stone rubbing can be reduced. From this viewpoint, the carbon black is contained in an amount of preferably 35 parts by mass or more, and more preferably 40 parts by mass or more. On the other hand, when the carbon black is contained in an amount of 70 parts by mass or less, the dispersibility of the carbon black is not lowered, and the matter that the coefficient of friction of the outer surface of the sidewall becomes rather high can be prevented from occurring. From this viewpoint, the carbon black is contained in an amount of preferably 70 parts by mass or less, more preferably 65 parts by mass or less, still more preferably 60 parts by mass or less, and especially preferably 55 parts by mass or less.

It is preferred that the rubber composition to be used for the vulcanized rubber body according to the present invention does not substantially contain silica. Specifically, it is preferred that the rubber composition does not contain silica, or even when it contains silica, the silica is contained in an amount of preferably 0.01 parts by mass or more and 10 parts by mass or less, and more preferably less than 5 parts by mass based on 100 parts by mass of the aforementioned rubber component. This is because there is a case where silica adsorbs the fatty acid amide to prevent the migration of the fatty acid amide onto the outer surface of the sidewall from occurring.

The matter that the rubber composition contains only carbon black as the filler is especially preferred from the viewpoint of enhancing the effect of the fatty acid amide.

(Carbon Black)

A nitrogen adsorption specific surface area ($N_2SA$) ($m^2$/g) of the carbon black according to the present invention is preferably 110 $m^2$/g or more, more preferably 120 $m^2$/g or more, still more preferably 130 $m^2$/g or more, and especially preferably 135 $m^2$/g or more. As for the carbon black, a fine particle diameter is more preferred than a large particle diameter from the viewpoint of suppressing the abrasion due to curb stone rubbing. From this viewpoint, though it is preferred that the $N_2SA$ is higher, the $N_2SA$ is preferably 180 $m^2$/g or less from the viewpoint of securing the workability of the unvulcanized rubber composition.

The nitrogen adsorption specific surface area ($N_2SA$) ($m^2$/g) of the carbon black according to the present invention is measured on the basis of JIS K6217-2:2001.

A dibutyl phthalate absorption amount (DBP absorption amount) ($cm^3$/100 g) of the carbon black according to the present invention is preferably 110 $cm^3$/100 g or more, more preferably 115 $cm^3$/100 g or more, still more preferably 120 $cm^3$/100 g or more, and especially preferably 125 $cm^3$/100 g or more. Though as the DBP absorption amount is higher, the abrasion resistance is more excellent, in general, it is preferably 170 $cm^3$/100 g or less from the viewpoint of easiness of production. When the DBP absorption amount is 110 $cm^3$/100 g or more, the tire has a high structure and is suppressed in the abrasion due to curb stone rubber, so that it is superior in the abrasion resistance.

The DBP absorption amount ($cm^3$/100 g) of the carbon black according to the present invention is measured on the basis of JIS K6217-4:2008, and an iodine adsorption amount (IA) thereof is measured on the basis of JIS K6217-1:2008.

Examples of the carbon black which is suitable for the present invention include N-135 ({representative value of carbon black for ASTM rubber (D1765-93)}, $N_2SA$: 145 $m^2$/g, IA: 151 g/kg, DBP absorption amount: 135 $cm^3$/100 g); and SAF-HS (manufactured by Cabot Corporation, a trade name: "VULCAN 10H", $N_2SA$: 148 $m^2$/g, IA: 137 g/kg, DBP absorption amount: 127 $cm^3$/100 g).

The carbon black may be used alone or may be used in combination of two or more thereof.

The rubber composition to be used for the vulcanized rubber body according to the present invention can contain compounding agents that are typically used in the field of rubber industry, for example, a vulcanizer, a vulcanization accelerator, a process oil, an antioxidant, a scorch retarder, zinc white, and stearic acid, if desired within a range where the object of the present invention is not impaired.

The rubber composition to be used for the vulcanized rubber body according to the present invention is obtained by means of kneading with a kneading machine, such as a Banbury mixer, a roll, and an internal mixer, and after molding processing, the resultant is vulcanized to form the vulcanized rubber body to be stuck onto the outer surface of the sidewall of the tire.

(Attaching Method of Vulcanized Rubber Body to Tire Sidewall)

In order to attach the vulcanized rubber body according to the present invention onto the outer surface of the tire sidewall, for example, the method may be performed in such a manner that an unvulcanized cushion rubber for tire regeneration is attached onto the outer surface of the sidewall so as to conform to a shape of the vulcanized rubber body, and the vulcanized rubber body is then attached thereonto, followed by press bonding at a vulcanization temperature of 95 to 110°C within a vulcanizer.

In addition, a commercially available adhesive can also be applied. Examples thereof include a chloroprene-based adhesive, an epoxy-based adhesive, a cyano acrylate-based adhesive, an acrylic adhesive, SGA (second generation acrylic adhesive), a urea-based adhesive, a urethane-based adhesive, a silicon-based adhesive, a melamine-based adhesive, and a phenol-based adhesive. On the occasion of performing the attaching, it is preferred to perform heating and/or pressurization, as the need arises.

Examples

The present invention is hereunder described in more detail by reference to Examples and Comparative Examples, but it should be construed that the present invention is by no means limited to the following Examples.

In the following Examples and Comparative Examples, respective measurements and evaluations were performed according to the following methods.

(1) 300% Tensile Stress

A No. 6 dumbbell-shaped test piece was prepared and subjected to a tensile test on the basis of JIS K6251:2010, thereby determining the 300% tensile stress (unit: MPa).

(2) Abrasion Resistance Index in Room

Using a DF tester (dynamic friction tester), manufactured by Nippo Ltd., the abrasion resistance index in room was calculated from the abrasion amount of the rubber shaven during a period of dropping of a measurement rate region of from 80 km/h to 0 km/h according to the following formula.

$$\text{Abrasion resistance index in room} = [(\text{Abrasion amount of vulcanized rubber body of tire of Comparative Example 1})/(\text{Abrasion amount of vulcanized rubber body of test tire})] \times 100$$

(3) Abrasion Resistance Index of Tire Having Vulcanized Rubber Body Stuck onto Outer Surface of Sidewall

A tire in which n kinds of vulcanized rubbers were divided in n sections and stuck onto the outer surface of a sidewall of one tire was allowed to run for 10 km while bringing it into contact with a curb stone, and the abrasion amount of each of the vulcanized rubber bodies was calculated, thereby evaluating the resistance to abrasion due to curb stone rubbing. The abrasion resistance index of the tire was calculated from the abrasion amount of the vulcanized rubber body according to the following formula.

$$[(\text{Abrasion amount of vulcanized rubber body of tire of Comparative Example 1})/(\text{Abrasion amount of vulcanized rubber body of test tire})] \times 100$$

Examples 1 to 6 and Comparative Examples 2 to 3

Eight kinds of rubber compositions of Examples 1 to 6 and Comparative Examples 2 to 3 were prepared on the basis of the mixing formulation shown in Table 2. These eight kinds of rubber compositions were vulcanized under pressure for a vulcanization time of 2.0 times of a 90% vulcanization time {tc(90)} as prescribed in JIS K6300-2:2001, thereby obtaining ten kinds of vulcanized rubber sheets and vulcanized rubber bodies. All of these vulcanized rubber bodies had an average thickness of 1.5 mm and an average width of 60 mm. The eight kinds of vulcanized rubber sheets were evaluated for the 300% tensile stress and the abrasion resistance index in room.

Subsequently, eight test tires were produced by attaching the eight kinds of vulcanized rubber bodies onto ten sections which are provided by dividing the outer surface of the sidewall of each tire in ten (n = 10 in each of eight kinds of vulcanized rubber bodies), respectively. In attaching of the vulcanized rubber bodies, an unvulcanized cushion rubber shown in Table 1 was attached onto the outer surface of the sidewall so as to conform to the shape of the vulcanized rubber body, and the vulcanized rubber body was attached thereonto as shown in Fig. 1, followed by press bonding at a vulcanization temperature of 100°C within a vulcanizer, thereby preparing a test tire.

The resistance to abrasion due to curb stone rubber of the obtained test tire was evaluated. The abrasion resistance was calculated as an average value of the ten test tires.

The evaluation results are shown in Table 2.

Examples 7 and Comparative Examples 1

Two kinds of rubber compositions of Example 7 and Comparative Example 1 were prepared on the basis of the mixing formulation shown in Table 2. These two kinds of rubber compositions were vulcanized under pressure for a vulcanization time of 2.0 times of a 90% vulcanization time {tc(90)} as prescribed in JIS K6300-2:2001, thereby obtaining ten kinds of vulcanized rubber sheets and vulcanized rubber bodies. All of these vulcanized rubber bodies had an average thickness of 1.5 mm and an average width of 60 mm. The two kinds of vulcanized rubber sheets were evaluated for the 300% tensile stress and the abrasion resistance index in room.

Subsequently, ten test tires were produced by attaching the two kinds of vulcanized rubber bodies onto ten sections which are provided by dividing the outer surface of the sidewall of each tire in ten (n = 10 in each of two kinds of vulcanized rubber bodies), respectively. In attaching of the vulcanized rubber bodies, an unvulcanized cushion rubber shown in Table 1 was attached onto the outer surface of the sidewall so as to conform to the shape of the vulcanized rubber body, and the vulcanized rubber body was attached thereonto as shown in Fig. 1, followed by press bonding at a vulcanization temperature of 100°C within a vulcanizer, thereby preparing a test tire.

The resistance to abrasion due to curb stone rubber of the obtained test tire was evaluated. The abrasion resistance was calculated as an average value of the ten test tires.

The evaluation results are shown in Table 2.

Table 1

| Mixing formulation of cushion rubber | (parts by mass) |
|---|---|
| Natural rubber | 100.00 |
| Carbon black (*1) | 30.00 |
| Zinc oxide (*2) | 4.00 |
| Oil (*3) | 10.00 |
| Stearic acid | 1.50 |
| Antioxidant 6C (*4) | 2.00 |
| Zinc dibenzyldithiocarbamate (*5) | 0.60 |
| Benzothiazyl disulfide (*6) | 0.60 |
| Condensate of butyl aldehyde and amine (butyl aldehyde aniline) (*7) | 2.00 |
| Sulfur | 3.30 |

*1: (Carbon black): manufactured by Asahi Carbon Co., Ltd., a model number·product name: ASAHI #105

*2: (Zinc oxide): manufactured by Hakusui Tech Co., Ltd., a model number·product name: Type II Zinc Oxide

*3: (Oil): manufactured by Sankyo Yuka Kogyo K.K., a model number·product name: A/O MIX

*4: (Antioxidant 6C): manufactured by Sumitomo Chemical Co., Ltd., a model number·product name: Antigen 6C

*5: (Zinc dibenzyldithiocarbamate): manufactured by Ouchi Shinko Chemical Industrial Co., Ltd., a model number·product name: Nocceler ZTC

*6: (Benzothiazyl disulfide): manufactured by Ouchi Shinko Chemical Industrial Co., Ltd., a model number·product name: Nocceler DM-P

*7: Condensate of butyl aldehyde and amine (butyl aldehyde aniline): manufactured by Ouchi Shinko Chemical Industrial Co., Ltd., a model number·product name: Nocceler 8.8-N

Table 2

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Natural rubber *1 | 40 | 40 | 40 | 40 | 40 | 40 | 20 | 40 | 40 | 40 |
| Polybutadiene rubber *2 | 60 | 60 | 60 | 60 | 60 | 60 | 80 | 60 | 60 | 60 |
| Carbon black *3 | 45 | 45 | 45 | 45 | 45 | | | 45 | 45 | 45 |
| Carbon black *4 | | | | | | 45 | 45 | | | |

(continued)

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Oleic acid amide *5 | 2.5 | 5.0 | 7.5 | 10 | 20 | 5 | 5 | 0 | 0 | 0 |
| Vulcanization accelerator *6 | 1.0 | 1.0 | 1.0 | 1.0 | 1.0 | 1.0 | 1.0 | 1.0 | 0.8 | 1.2 |
| Sulfur | 1.5 | 1.5 | 1.5 | 1.5 | 1.5 | 1.5 | 1.5 | 1.5 | 1.2 | 1.8 |
| 300% Tensile stress (MPa) | 5.9 | 5.7 | 5.7 | 5.6 | 5.5 | 6.4 | 5.9 | 6.4 | 5.2 | 7.1 |
| Abrasion resistance index in room | 115 | 120 | 125 | 125 | 125 | 160 | 170 | 100 | 95 | 102 |
| Abrasion resistance index of tire | 110 | 112 | 118 | 118 | 120 | 145 | 200 | 100 | 98 | 101 |

[Note]

*1: RSS#1

*2: manufactured by JSR Corporation, a trade name: "JSR BR01"

*3: Carbon Black N330 (manufactured by Asahi Carbon Co., Ltd., a trade name: "Asahi #70", $Na_2SA$: 77 $m^2$/g, IA: 80 g/kg, DBP absorption amount: 101 $cm^3$/100 g)

*4: Carbon Black SAF-HS (manufactured by Cabot Corporation, a trade name: "VULCAN 10H", $N_2SA$: 148 $m^2$/g, IA: 137 g/kg, DBP absorption amount: 127 $cm^3$/100 g)

*5: manufactured by Kao Corporation, a trade name: "Fatty Acid Amide O-N"

*6: N-Cyclohexyl-2-benzothiazolyl sulfenamide (manufactured by Ouchi Shinko Chemical Industrial Co., Ltd., a trade name: "Nocceler CZ-G")

Units of the numerical values in the mixing formulation in Table 2 are parts by mass.

From the results of Table 2, in the tire having the vulcanized rubber body according to the present invention attached onto the outer surface of the sidewall, since the coefficient of friction is significantly reduced, the abrasion due to curb stone rubbing of the tire could be suitably suppressed while keeping the 300% tensile stress (without the sidewall rubber becoming hard). On the other hand, in the case of not containing the fatty acid amide, the coefficient of friction is high, and the resistance to abrasion due to curb stone rubbing is inferior, so that the problem of the present invention could not be solved.

Industrial Applicability

The tire having the vulcanized rubber body according to the present invention attached onto the outer surface of the sidewall can be suitably used as a heavy duty pneumatic tire to be used for vehicles having a relatively heavy total vehicle weight, such as trucks or buses inclusive of small-sized trucks, or off-road vehicles for construction vehicles, mine vehicles, etc., and in particular, a pneumatic tire for urban driving bus.

**Claims**

1.  A tire prepared by attaching a vulcanized rubber body of a rubber composition containing a fatty acid amide onto the outer surface of a sidewall thereof.

2.  The tire according to claim 1, wherein a rubber component of the rubber composition contains 60 to 100% by mass of a diene-based rubber.

3. The tire according to claim 2, wherein the rubber composition contains 1 to 25 parts by mass of the fatty acid amide based on 100 parts by mass of the rubber component.

4. The tire according to claim 2 or 3, wherein the rubber composition contains 30 parts by mass or more of carbon black based on 100 parts by mass of the rubber component.

5. The tire according to any one of claims 2 to 4, wherein the rubber composition does not contain silica, or contains silica in an amount of 0.01 parts by mass or more and less than 5 parts by mass based on 100 parts by mass of the rubber component.

6. The tire according to claim 4 or 5, wherein the carbon black has a nitrogen adsorption specific surface area ($N_2SA$) ($m^2$/g) of 110 $m^2$/g or more.

7. The tire according to any one of claims 4 to 6, wherein the carbon black has a nitrogen adsorption specific surface area ($N_2SA$) ($m^2$/g) of 110 $m^2$/g or more and a dibutyl phthalate absorption amount (DBP absorption amount) ($cm^3$/100 g) of 110 $cm^3$/100 g or more.

8. The tire according to any one of claims 2 to 7, wherein the rubber component of the rubber composition contains a natural rubber and a polybutadiene rubber, and a mass ratio of natural rubber/polybutadiene rubber is from 50/50 to 10/90.

9. The tire according to any one of claims 1 to 8, wherein the vulcanized rubber body has an average thickness of 1 to 3 mm and an average width of 30 to 80 mm.

10. The tire according to any one of claims 1 to 9, which is a heavy duty pneumatic tire.

11. The tire according to any one of claims 1 to 10, which is used for a pneumatic tire for urban driving bus.

12. A vulcanized rubber body of a rubber composition comprising a fatty acid amide.

13. The vulcanized rubber body according to claim 12, wherein a rubber component of the rubber composition contains 60 to 100% by mass of a diene-based rubber.

14. The vulcanized rubber body according to claim 12 or 13, wherein the rubber composition contains 1 to 25 parts by mass of the fatty acid amide based on 100 parts by mass of the rubber component.

[Fig. 1]

## INTERNATIONAL SEARCH REPORT

| International application No. |
| --- |
| PCT/JP2019/017477 |

| A. CLASSIFICATION OF SUBJECT MATTER |
| --- |
| Int.Cl. B60C13/00(2006.01)i, B60C1/00(2006.01)i, B60C13/04(2006.01)i, C08K3/01(2018.01)i, C08K3/04(2006.01)i, C08K3/36(2006.01)i, C08K5/20(2006.01)i, C08L7/00(2006.01)i, C08L9/00(2006.01)i, C08L21/00(2006.01)i |
| According to International Patent Classification (IPC) or to both national classification and IPC |

| B. FIELDS SEARCHED |
| --- |
| Minimum documentation searched (classification system followed by classification symbols) |
| Int.Cl. B60C13/00-13/04, B60C1/00, C08K3/00-13/08, C08L1/00-101/14 |

| Documentation searched other than minimum documentation to the extent that such documents are included in the fields searched |
| --- |
| Published examined utility model applications of Japan 1922-1996 |
| Published unexamined utility model applications of Japan 1971-2019 |
| Registered utility model specifications of Japan 1996-2019 |
| Published registered utility model applications of Japan 1994-2019 |

| Electronic data base consulted during the international search (name of data base and, where practicable, search terms used) |
| --- |
| |

## C. DOCUMENTS CONSIDERED TO BE RELEVANT

| Category* | Citation of document, with indication, where appropriate, of the relevant passages | Relevant to claim No. |
| --- | --- | --- |
| X Y | JP 2017-532419 A (BRIDGESTONE CORPORATION) 02 November 2017, claims, paragraphs [0035], [0038], examples & US 2017/0240722 A1, claims, paragraphs [0040], [0043], examples & WO 2016/061300 A1 & EP 3207091 A1 & CN 107001707 A | 12-14 1-11 |
| X | WO 2018/070249 A1 (TOYO TIRE AND RUBBER CO., LTD.) 19 April 2018, example 7 & JP 2018-62627 A | 12-14 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 July 2019 (11.07.2019) | 23 July 2019 (23.07.2019) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2019/017477

C (Continuation). DOCUMENTS CONSIDERED TO BE RELEVANT

| Category* | Citation of document, with indication, where appropriate, of the relevant passages | Relevant to claim No. |
|---|---|---|
| X | JP 2008-150435 A (TOYO TIRE AND RUBBER CO., LTD.) 03 July 2008, example 8 (Family: none) | 12-14 |
| Y | JP 9-86107 A (BRIDGESTONE CORPORATION) 31 March 1997, claim 1, example 2 (Family: none) | 1-11 |
| P, X | JP 2018-95111 A (BRIDGESTONE CORPORATION) 21 June 2018, paragraph [0011], example 1, fig. 3 (Family: none) | 1-5, 10-14 |
| P, X | JP 2018-80302 A (BRIDGESTONE CORPORATION) 24 May 2018, claims, table 1 (Family: none) | 12-14 |
| A | JP 5-185810 A (SUMITOMO RUBBER INDUSTRIES, LTD.) 27 July 1993, entire text & US 5388627 A, whole document & EP 551997 A1 & CA 2086638 A1 | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H10195249 A